# EUROPEAN PATENT SPECIFICATION

(11) **EP 3 522 293 B1**
(45) Date of publication and mention of the grant of the patent: **13.05.2020**
(21) Application number: 18184517.3
(22) Date of filing: 19.07.2018
(51) Int. Cl.: H01M 10/658, H01M 10/647, H01M 10/617, H01M 2/10, H01M 10/653, H01M 10/6555, H01M 10/6554

(54) **BATTERY MODULE**
BATTERIEMODUL
MODULE DE BATTERIE

(30) Priority: 06.02.2018 CN 201820205762 U
(43) Date of publication of application: 07.08.2019
(73) Proprietor: Contemporary Amperex Technology Co., Limited, Jiaocheng District Ningde City, Fujian 352100 (CN)
(72) Inventor: QIN, Feng, Ningde City, Fujian 352100 (CN); WANG, Zhi, Ningde City, Fujian 352100 (CN); MA, Lin, Ningde City, Fujian 352100 (CN); WANG, Wei, Ningde City, Fujian 352100 (CN); WANG, Xiaofan, Ningde City, Fujian 352100 (CN); XIAO, Xinfu, Ningde City, Fujian 352100 (CN)
(74) Representative: Boult Wade Tennant LLP

(56) References cited:
- US-A1- 2013 130 087
- US-A1- 2014 011 059

## Description

### FIELD

The present disclosure relates to the technical field of power battery, and in particular, to a battery module.

### BACKGROUND

With the enhancement of consciousness in environmental protection and the emergence of a low-carbon economy, more and more devices, such as mobile phones, laptops, power tools, electric vehicles, and the like, are designed to use rechargeable lithium-ion battery modules as power sources. With increasing demand for energy density of the lithium-ion battery, the requirement for heat management of the lithium-ion battery is also increasing.

In the related art, a plurality of lithium-ion batteries are usually assembled into a battery stack which then is cooled by water cooling. As the housing is a closed structure, the entire housing is cooled when the lithium-ion battery module is cooled. There are many heat conduction paths for the battery that directly contacts the inner wall of the housing, as a result, the temperature of this battery is lower than the temperature of batteries that are located in the middle of the housing. Therefore, uniformity of the temperature among the individual batteries is poor, which is disadvantageous in the heat management of the lithium-ion battery modules.

US-A-2013/130087 discloses a battery module in accordance with the precharacterizing portion of claim 1.

### SUMMARY

Embodiments of the present disclosure provide a battery module that may ensure uniformity in temperature among individual batteries.

In an embodiment of the present disclosure, a battery module is provided. The battery module includes: a housing including a top plate and a bottom plate which are disposed opposite to each other, and two side plates which are connected to the top plate and the bottom plate and spaced along a first direction; two end plates spaced along a second direction which is perpendicular to the first direction, wherein the two side plates are alternately connected with the two end plates; a battery stack including a plurality of batteries arranged side by side between the two side plates, wherein the plurality of batteries extend between the two end plates in the second direction; heat insulators disposed between the battery stack and the side plates; and a cushion disposed between the battery stack and one of the top plate and the bottom plate,
wherein the battery module further includes one heat conductor which is disposed between the battery stack and the top plate or the bottom plate, and wherein the heat conductor is disposed in contact with each of the plurality of batteries; or the battery module further comprises two heat conductor which are disposed between the battery stack and the top plate and between the battery stack and the bottom plate respectively, and wherein the heat conductors are disposed in contact with each of the plurality of batteries.

According to an aspect of an embodiment of the present disclosure, the battery stack includes a top end and a bottom end which are opposite to one another, and wherein at least one of the top end and the bottom end is disposed with the heat conductor.

According to an aspect of an embodiment of the present disclosure, a heat conductor is further disposed between two adjacent batteries in the battery stack.

According to an aspect of an embodiment of the present disclosure, the housing is made of aluminum alloy, stainless steel or iron.

According to an aspect of an embodiment of the present disclosure, one of the plurality of batteries includes a plastic shell, an aluminum alloy shell, a stainless steel shell, or an iron shell.

According to an aspect of an embodiment of the present disclosure, a gap is provided between the battery stack and the side plates.

According to an aspect of an embodiment of the present disclosure, the heat conductor is a silicon plate with a heat conduction coefficient of 1 W/m•K∼3 W/m•K.

According to an aspect of an embodiment of the present disclosure, the heat insulator is an ethylene propylene diene monomer (EPDM) plate with a heat conduction coefficient less than or equal to 0.05 W/m•K.

According to the battery module provided in the embodiment of the present disclosure, a heat insulator is disposed between the side plates of the housing and the battery stack, so that the heat conduction paths and heat conduction efficiency between the plurality of batteries arranged side by side in the housing and the housing are the same. As a result, the uniformity in temperature among the individual batteries is guaranteed and the reliability of the battery module is improved.

### BRIEF DESCRIPTION OF THE DRAWINGS

Features, advantages, and technical effects of exemplary embodiments of the present disclosure will be described below with reference to the accompanying drawings.
Fig. 1 is a schematic perspective view of a battery module according to an embodiment of the present disclosure;
Fig. 2 is a schematic view of a breakdown structure of the battery module shown in Fig. 1;
Fig. 3 is a sectional view taken along direction A-A shown in Fig. 1;
Fig. 4 is a schematic enlarged partial view of a region B of the battery module shown in Fig. 3;
Fig. 5 is a schematic enlarged partial view of a region C of the battery module shown in Fig. 3;
Fig. 6 is a schematic enlarged partial view of a region D of the battery module shown in Fig. 3.

### Reference labels in the figures:

10- Housing
11- Side plate
12- Top plate
13- Bottom plate
20- End plate
30- Battery stack
31- Battery
40- Heat insulator
50- Cushion
60- Heat conductor

In the drawings, the same reference signs denote the same features. The drawings are not shown in actual scale.

### DETAILED DESCRIPTION

The features and exemplary embodiments of the various aspects of the present disclosure will be described in detail below. In the following detailed description, numerous specific details are set forth in order to provide a thorough understanding of the present disclosure. It will be apparent, however, to those skilled in the art that the present disclosure may be practiced without some of these specific details. The following description of embodiments is only provided by illustrating examples for a better understanding of the present disclosure. In the drawings and the following description, at least a part of well-known structures and techniques are not shown in order to avoid unnecessarily obscuring the present disclosure. Further, for clarity, the size of a part of the structures may be exaggerated. Furthermore, the features, structures, or characteristics described below can be combined in any suitable manner in one or more embodiments.

The terms denoting directions that appear in the following description indicate directions shown in the drawings, and do not limit specific structures of the secondary battery of the present disclosure. In the description of the present disclosure, it should also be noted that the terms "mounted", "connected" and "connection" should be interpreted in a broad sense unless explicitly defined and limited otherwise. For example, it may indicate "fixed connection", "disassemble connection" or "integral connection"; it may indicate a direct connection or an indirect connection. For those skilled in the art, specific meanings of the above terms in the present disclosure may be understood depending on specific situations.

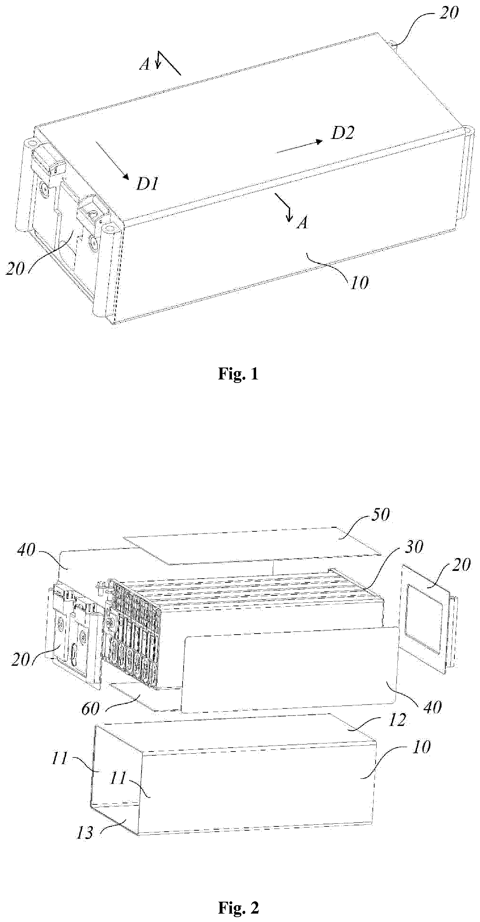

For a better understanding of the present disclosure, a battery module according to embodiments of the present disclosure will be described in detail below with reference to Fig. 1 to Fig. 6.

Referring to Figs. 1 to 6, an embodiment of the present disclosure provides a battery module including a housing 10, two end plates 20, a battery stack 30, a heat insulator 40, and a cushion 50.

The housing 10 includes a top plate 12, a bottom plate 13, and two side plates 11. The top plate 12 and the bottom plate 13 are disposed opposite to each other. The two side plates 11 are connected to the top plate 12 and the bottom plate 13 and spaced along a first direction D1. The first direction D1 is shown by an arrow in Fig. 1. The housing 10 may be made of aluminum alloy, stainless steel, or iron. The embodiments of the present disclosure are described with a stainless steel housing 10.

The two end plates 20 are spaced along a second direction D2 perpendicular to the first direction D1. The two side plates 11 are alternated with the two end plates 20 and connected to each other. The second direction D2 is shown by an arrow in Fig. 1.

The battery stack 30 may include a plurality of batteries 31 arranged side by side between the two side plates 11. Each of the plurality of batteries 31 extends between the two end plates 20 in the second direction D2. The battery 31 includes a plastic shell, an aluminum alloy shell, a stainless steel shell, or an iron shell. The plastic shell may be made of, for example but not limited to, polypropylene (PP).

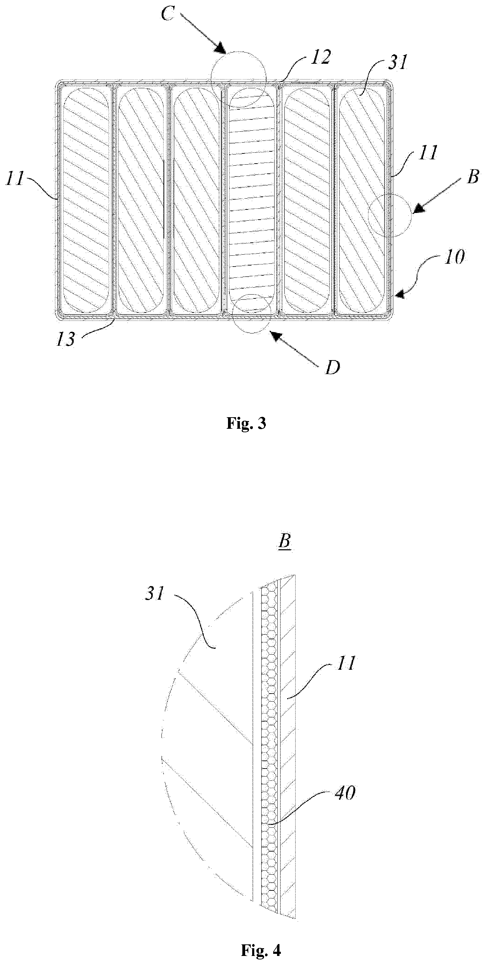

As shown in Fig. 4, the heat insulator 40 may be disposed between the battery stack 30 and the side plates 11 to effectively isolate the heat between the side plates 11 and the neighboring batteries 31 and control uniform heat delivery between each battery 31.

The cushion 50 may be disposed between the battery stack 30 and the top plate 12 and/or between the battery stack 30 and the bottom plate 13. The cushion 50 may be an elastic member with a certain thickness for preventing the battery stack 30 from being moving between the top plate 12 and the bottom plate 13 of the housing 10.

Specifically, as shown in Fig. 2, six batteries 31, for example, are assembled into a battery stack 30 and assembled in an aluminum alloy housing 10. Two end plates 20 are respectively welded to both ends of the housing 10 to form a closed cavity. Both ends of each battery 31 are respectively provided with output terminals that are connected to the end plates 20. The battery stack 30 is accommodated in the housing 10, and a cushion is disposed between the battery stack 30 and the top plate 12. The batteries 31 adjacent to the two side plates 11 of the housing 10 have more heat conduction paths than the batteries 31 located in the middle of the housing 10, as a result, the heat conduction efficiency among the batteries 31 of the battery stack 30 is different. If the heat insulator 40 is disposed between the side plates 11 and the battery stack 30, the heat between the side plates and the adjacent batteries 31 can be effectively isolated, so that the heat conduction paths between each battery 31 and the housings 10 are the same. As a result, the heat conduction efficiency may be uniform. In this way, uniform cooling of each battery 31 can be achieved when the housing 10 is cooled.

According to the battery module provided in an embodiment of the present disclosure, the heat insulator 40 is disposed between the side plates 11 of the housing 10 and the battery stack 30. In this way, the heat conduction paths and heat conduction efficiency between the housing 10 and the plurality of batteries 31 arranged side by side in the housing 10 are the same, so that the temperature uniformity among the individual batteries 31 can be ensured, and the reliability of the battery module is improved.

In order to improve heat dissipation efficiency while keeping uniform heat dissipation, the battery module according to an embodiment of the present disclosure may further include a heat conductor 60, especially for a battery 31 with a plastic housing.

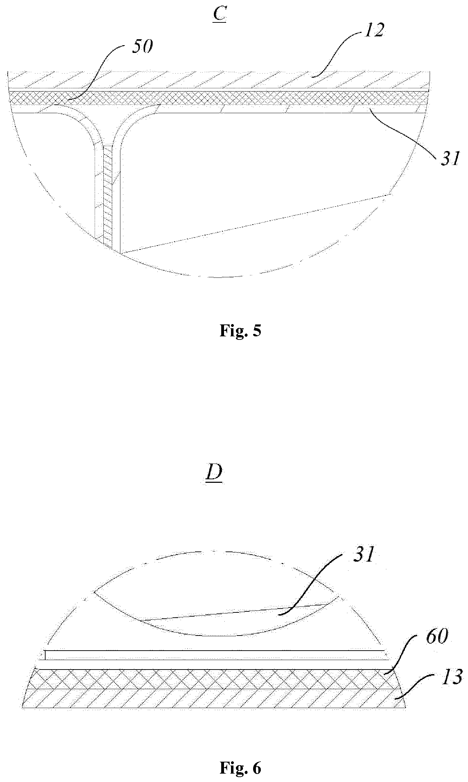

As an optional embodiment, the heat conductor 60 may be disposed between the top plate 12 and the battery stack 30 and/or between the bottom plate 13 and the battery stack 30. For example, the heat conductor 60 may be disposed between the bottom plate 13 and the battery stack 30, as shown in Fig. 6.

As an optional embodiment, the battery stack 30 may include oppositely disposed top end and bottom end, and at least one of the top end and bottom end may be disposed with a heat conductor 60. Furthermore, the heat conductor 60 may be disposed in contact with each battery 31.

Specifically, when the heat conductor 60 is disposed between the top plate 12 and the battery stack 30, the cushion 50 may be disposed between the bottom plate 13 and the battery stack 30; and when the heat conductor 60 is disposed between the bottom plate 13 and the battery stack 30, the cushion 50 may be disposed between the top plate 12 and the heat conductor 60, as shown in Fig. 5. When heat conductors 60 are disposed between the top plate 12 and the battery stack 30 and between the bottom plate 13 and the battery stack 30, the cushion 50 may be disposed between the top plate 12 and the heat conductor 60 and/or between the bottom plate 13 and the heat conductor 60.

As an optional embodiment, a heat conductor 60 may be disposed between two adjacent batteries 31 in the battery stack 30. The heat conductor 60 may enable quick transfer of heat of the individual batteries 31 in the direction of the top plate or the bottom plate of the housing 10. The heat conductor 60 disposed between two adjacent batteries 31 may also enable quick transfer of heat of the individual batteries 31 in the direction of the top plate or the bottom plate of the housing 10 along with the above heat conductor (s) 60 disposed between the top plate 12 and the battery stack 30 and/or between the bottom plate 13 and the battery stack 30, so that the number of heat conduction paths may be further increased. The plurality of heat conductors 60 may serve as heat transfer medium between the battery stack 30 and the housing 10, and therefore uniform transfer of heat among the individual batteries 31 can be more effectively controlled.

Further, in order to facilitate forming of the battery stack 30 from the plurality of batteries 31 and assembling of the battery stack 30 into the cavity of the housing 10, a gap may be provided between the battery stack 30 and the side plates 11. For example, the wall thickness of the plastic housing of the battery 31 is 0.5 mm; the wall thickness of the aluminum alloy housing 10 is 1 mm; and the thickness of the heat conductor 60 and the heat insulator 40 is generally 0.5 mm to 3 mm, for example, 1 mm. Then the gap may also be set to 1 mm to facilitate the assembly of the heat insulators 40 between the side plates 11 of the aluminum alloy housing 10 and the battery stack 30.

According to an optional embodiment, the heat conductor 60 may be a silicon plate with a heat conduction coefficient of 1 W/m•K∼3 W/m•K.

According to an optional embodiment, the heat insulator 40 may be an ethylene propylene diene monomer (EPDM) plate with a heat conduction coefficient less than or equal to 0.05 W/m•K.

It should be understood that, the battery modules provided in the embodiments of the present disclosure may be applicable to any type of battery module, including but not limited to lithium-ion battery, lead battery, and the like, which will not be described herein.

Therefore, according to the battery modules provided in the embodiments of the present disclosure, heat insulators 40 are disposed between the side plates 11 of the housing 10 and the battery stack 30, and furthermore, heat conductors 60 are disposed between the top plate 12 and/or the bottom plate 13 of the housing 10 and the battery stack 30 as well as between adjacent batteries 31. In this way, the heat conduction paths and heat conduction efficiency among the plurality of batteries 31 arranged side by side in the housing 10 are the same, and furthermore, the heat conduction efficiency can be improved. As a result, the temperature uniformity among the individual batteries 31 can be ensured, and the reliability of the battery module is improved.

Although the present disclosure has been described with reference to some embodiments, various modifications may be made thereto without departing from the scope of the present disclosure and components herein may be replaced with equivalents thereof. In particular, as long as there is no structural conflict, the various technical features mentioned in the various embodiments may be combined in any manner. The present disclosure is not limited to the specific embodiments disclosed herein, but includes all technical solutions that fall within the scope of the claims.

## Claims

1. A battery module, comprising:
a housing (10) comprising a top plate (12) and a bottom plate (13) which are disposed opposite to each other, and two side plates (11) which are connected to the top plate (12) and the bottom plate (13) and spaced along a first direction (D1);
two end plates (20) spaced along a second direction (D2) which is perpendicular to the first direction (D1), wherein the two side plates (11) are alternately connected with the two end plates (20);
a battery stack (30) comprising a plurality of batteries (31) arranged side by side between the two side plates (11), wherein the plurality of batteries (31) extend between the two end plates (20) in the second direction (D2);
heat insulators (40) disposed between the battery stack (30) and the side plates (11);
**characterized by**:
a cushion (50) disposed between the battery stack (30) and at least one of the top plate (12) and the bottom plate (13),
the battery module being further **characterized by** one heat conductor (60) which is disposed between the battery stack (30) and the top plate (12) or the bottom plate (13), and wherein the heat conductor (60) is disposed in contact with each of the plurality of batteries (31);
or the battery module further comprises two heat conductor (60) which are disposed between the battery stack (30) and the top plate (12) and between the battery stack (30) and the bottom plate (13) respectively, and wherein the heat conductors (60) are disposed in contact with each of the plurality of batteries (31).

2. The battery module of claim 1, wherein the battery stack (30) comprises a top end and a bottom end which are opposite to one another, and wherein at least one of the top end and the bottom end is disposed with the heat conductor (60).

3. The battery module of any of claims 1 to 2, wherein a heat conductor (60) is further disposed between two adjacent batteries (31) in the battery stack (30).

4. The battery module of claim 1, wherein the housing (10) is made of aluminum alloy, stainless steel or iron.

5. The battery module of claim 1, wherein one of the plurality of batteries (31) includes a plastic shell, an aluminum alloy shell, a stainless steel shell, or an iron shell.

6. The battery module of claim 1, wherein a gap is provided between the battery stack (30) and the side plates (11).

7. The battery module of claim 1, wherein the heat conductor (60) is a silicon plate with a heat conduction coefficient of 1 W/m•K∼3 W/m•K.

8. The battery module of claim 1, wherein the heat insulator (40) is an ethylene propylene diene monomer (EPDM) plate with a heat conduction coefficient less than or equal to 0.05 W/m•K.

## Patentansprüche

1. Batteriemodul, umfassend:
ein Gehäuse (10), der eine obere Platte (12) und eine untere Platte (13) umfasst, die gegenüberliegend angeordnet sind, sowie zwei Seitenplatten (11), die mit der oberen Platte (12) und der unteren Platte (13) verbunden sind und entlang einer ersten Richtung (D1) beabstandet sind;
zwei Endplatten (20), die entlang einer zweiten Richtung (D2) beabstandet sind, die senkrecht zur ersten Richtung (D1) ist, wobei die zwei Seitenplatten (11) abwechselnd mit den zwei Endplatten (20) verbunden sind;
einen Batteriepack (30), der mehrere nebeneinander angeordnete Batterien (31) zwischen den zwei Seitenplatten (11) umfasst, wobei sich die mehreren Batterien (31) zwischen den zwei Endplatten (20) in der zweiten Richtung (D2) erstrecken;
Wärmeisolatoren (40), die zwischen dem Batteriepack (30) und den Seitenplatten (11) angeordnet sind; **gekennzeichnet durch**:
ein Kissen (50), das zwischen dem Batteriepack (30) und mindestens einer der oberen Platte (12) und der unteren Platte (13) angeordnet ist;
das Batteriemodul ferner durch einen Wärmeleiter (60) gekennzeichnet ist, der zwischen dem Batteriepack (30) und der oberen Platte (12) oder der unteren Platte (13) angeordnet ist, und wobei der Wärmeleiter (60) in Kontakt mit jeder der mehreren Batterien (31) angeordnet ist;
oder das Batteriemodul ferner zwei Wärmeleiter (60) umfasst, die jeweils zwischen dem Batteriepack (30) und der oberen Platte (12) und zwischen dem Batteriepack (30) und der unteren Platte (13) angeordnet sind, und wobei die Wärmeleiter (60) in Kontakt mit jeder der mehreren Batterien (31) angeordnet sind.

2. Batteriemodul nach Anspruch 1, wobei der Batteriepack (30) ein oberes Ende und ein unteres Ende umfasst, die einander entgegengesetzt sind, und wobei mindestens eines der oberen und unteren Enden mit dem Wärmeleiter (60) angeordnet ist.

3. Batteriemodul nach einem der Ansprüche 1 bis 2, wobei ein Wärmeleiter (60) ferner zwischen zwei benachbarten Batterien (31) in dem Batteriepack (30) angeordnet ist.

4. Batteriemodul nach Anspruch 1, wobei das Gehäuse (10) aus Aluminiumlegierung, rostfreiem Stahl oder Eisen besteht.

5. Batteriemodul nach Anspruch 1, wobei eine der mehreren Batterien (31) eine Kunststoffschale, eine Aluminiumlegierungsschale, eine Edelstahlschale oder eine Eisenschale aufweist.

6. Batteriemodul nach Anspruch 1, wobei ein Spalt zwischen dem Batteriepack (30) und den Seitenplatten (11) vorgesehen ist.

7. Batteriemodul nach Anspruch 1, wobei der Wärmeleiter (60) eine Siliziumplatte mit einem Wärmeleitungskoeffizient von 1 W/m • K^{∼}3W/m • K ist.

8. Batteriemodul nach Anspruch 1, wobei der Wärmeisolator (40) eine Ethylen-Propylen-Dien-Monomer(EPDM)-Platte mit einem Wärmeleitungskoeffizient von weniger als oder gleich 0, 05W/m • K ist.

## Revendications

1. Module de batteries, comprenant :
un boîtier (10) comprenant une plaque supérieure (12) et une plaque inférieure (13) qui sont disposées en regard l'une de l'autre, et deux plaques latérales (11) qui sont reliées à la plaque supérieure (12) et à la plaque inférieure (13) et espacées le long d'une première direction (D1) ;
deux plaques d'extrémité (20) espacées le long d'une deuxième direction (D2) qui est perpendiculaire à la première direction (D1), où les deux plaques latérales (11) sont reliées en alternance aux deux plaques d'extrémité (20) ;
un empilement de batteries (30) comprenant une pluralité de batteries (31) agencées côte à côte entre les deux plaques latérales (11), où la pluralité de batteries (31) s'étendent entre les deux plaques d'extrémité (20) dans la deuxième direction (D2) ;
des isolants thermiques (40) disposés entre l'empilement de batteries (30) et les plaques latérales (11); **caractérisé par** :
un coussin (50) disposé entre l'empilement de batteries (30) et au moins l'une de la plaque supérieure (12) et de la plaque inférieure (13),
le module de batteries étant en outre **caractérisé par** un conducteur thermique (60) qui est disposé entre l'empilement de batteries (30) et la plaque supérieure (12) ou la plaque inférieure (13), et où le conducteur thermique (60) est disposé en contact avec chacune de la pluralité de batteries (31) ;
ou le module de batteries comprend en outre deux conducteurs thermique (60) qui sont disposés entre l'empilement de batteries (30) et la plaque supérieure (12) et entre l'empilement de batteries (30) et la plaque inférieure (13) respectivement, et où les conducteurs thermiques (60) sont disposés en contact avec chacune de la pluralité de batteries (31).

2. Module de batteries de la revendication 1, dans lequel l'empilement de batteries (30) comprend une extrémité supérieure et une extrémité inférieure qui sont opposées l'une à l'autre, et dans lequel au moins l'une de l'extrémité supérieure et de l'extrémité inférieure est disposée avec le conducteur thermique (60).

3. Module de batteries de l'une des revendications 1 et 2, dans lequel un conducteur thermique (60) est en outre disposé entre deux batteries adjacentes (31) dans l'empilement de batteries (30).

4. Module de batteries de la revendication 1, dans lequel le boîtier (10) est réalisé en un alliage d'aluminium, en acier inoxydable ou en fer.

5. Module de batteries de la revendication 1, dans lequel l'une de la pluralité de batteries (31) comporte une coque en plastique, une coque en alliage d'aluminium, une coque en acier inoxydable ou une coque en fer.

6. Module de batteries de la revendication 1, dans lequel un espace est prévu entre l'empilement de batteries (30) et les plaques latérales (11).

7. Module de batteries de la revendication 1, dans lequel le conducteur thermique (60) est une plaque de silicium ayant un coefficient de conduction thermique de 1 W/m·K à 3 W/m·K.

8. Module de batteries de la revendication 1, dans lequel l'isolant thermique (40) est une plaque en monomère d'éthylène-propylène-diène (EPDM) ayant un coefficient de conduction thermique inférieur ou égal à 0,05 W/m·K.
